# EUROPEAN PATENT SPECIFICATION

(11) **EP 4 639 466 B1**
(45) Date of publication and mention of the grant of the patent: **16.09.2026**
(21) Application number: 23841321.5
(22) Date of filing: 19.12.2023
(51) Int. Cl.: G06T 7/00

(54) **METHOD AND SYSTEM FOR DETECTING IN REAL-TIME, THROUGH THE USE OF ARTIFICIAL INTELLIGENCE (AI), ANOMALIES OF AN OBJECT SUBJECTED TO A DURABILITY TEST**
VERFAHREN UND SYSTEM ZUR ECHTZEITERKENNUNG UNTER VERWENDUNG VON KÜNSTLICHER INTELLIGENZ (AI) VON ANOMALIEN EINES OBJEKTS, WELCHES EINEM DAUERHAFTIGKEITSTESTS UNTERZOGEN WIRD
PROCÉDÉ ET SYSTÈME DE DÉTECTION EN TEMPS RÉEL, PAR L'UTILISATION D'INTELLIGENCE ARTIFICIELLE (IA), D'ANOMALIES D'UN OBJET SOUMIS À UN TEST DE DURABILITÉ

(30) Priority: 19.12.2022 IT 202200025935
(43) Date of publication of application: 29.10.2025
(73) Proprietor: Brembo S.p.A., 24035 Curno (Bergamo) (IT)
(72) Inventor: AVON, Alberto, 24035 Curno, BERGAMO (IT); BENETTI, Danilo, 24035 Curno, BERGAMO (IT); KHORNEGAH, Mahshad, 24035 Curno, BERGAMO (IT); MALMASSARI, Cristian, 24035 Curno, BERGAMO (IT); PESAPANE, Alessio, 24035 Curno, Bergamo (IT); RESCATI, Micael, 24035 Curno, BERGAMO (IT); ZOPPETTI, Paolo, 24035 Curno, BERGAMO (IT)
(74) Representative: Mozzi, Matteo
(86) International application number: PCT/IB2023/062927
(87) International publication number: WO 2024/134486

(56) References cited:
- EP-A1- 3 556 576
- BATISTAKIS DIMITRIOS ET AL: "An AI-based Prediction-as-a-Service Model for Estimating Machine Bearing Health Status in Industry 4.0 5G Applications", 2021 12TH INTERNATIONAL CONFERENCE ON INFORMATION, INTELLIGENCE, SYSTEMS & APPLICATIONS (IISA), IEEE, 12 July 2021 (2021-07-12), pages 1 - 8, XP033983850, DOI: 10.1109/IISA52424.2021.9555538
- JAN PAUL ASSENDORP: "Deep learning for anomaly detection in multivariate time series data", MASTERARBEIT, September 2017 (2017-09-01), XP055735348, Retrieved from the Internet <URL:https://users.informatik.haw-hamburg.de/~ubicomp/arbeiten/master/assendorp.pdf> [retrieved on 20200930]

## Description

### . Field of the invention

**.** The present invention relates to a method and related system for detecting in real-time, through the use of artificial intelligence (AI), anomalies of an object subjected to a durability test.

### . Background art

**.** The use of artificial intelligence (AI) techniques for recognizing anomalous images with respect to images representing normality conditions is now consolidated.

**.** Such tools provide for the analysis, by a suitably conceived algorithm (usually one or more neural networks), of images taken manually or automatically in which anomalies of different types and different severity could be present.

**.** The algorithm is suitably trained to recognize images representing the normality conditions and recognizes the deviations from such a reference as anomalies.

**.** A so-called *anomaly detection* algorithm is preferable to an *object detection* algorithm based on *deep learning* when the multiplicity of anomalous modes makes it difficult to collect sufficient anomalous data to perform training on the anomalous images.

**.** Examples in fields of application of these techniques are: the search for defects in industrial items and the recognition of anomalies in images of traffic or a crowd.

**.** Moreover, an *anomaly detection* algorithm is used when the searched defect is known but very rare and therefore there are few available images with the defect.

**.** No attempt has been made in the prior art to take advantage of the potential of artificial intelligence (AI) for automating durability tests, e.g., a vibration resistance durability test, on assembled components.

**.** In this respect, the durability tests are applicable to those products which, during transport or operation, can be subject to harmonic vibrations, broadband vibrations or mechanical shocks.

**.** A durability test aims to define the dynamic behavior of the samples, detect any mechanical weaknesses or deterioration in the specified performance.

**.** Tests of this type are common in the automobile, railway, military, aeronautic, space, nuclear and telecommunications fields for testing complex components.

**.** According to the methods in use, a durability test, in the specific case of a vibration durability test, includes applying a vibration profile (random, sinusoidal, etc.) to the component and monitoring the state of the tested component over time by means of inspections or measurements of its specific properties.

**.** The duration of a generic test of this type is in the order of tens of hours (24 to 48) and is concluded when it reaches its natural end or as soon as any defect (i.e., change in the position of a sub-component, its detachment from the main body, etc.) is detected on the component.

**.** The vibration resistance tests thus conducted are very expensive in terms of resources, also due to the lengthy duration thereof.

**.** Indeed, in addition to the prolonged occupation of a machine, the presence of an operator monitoring the state of the component is required.

**.** Moreover, this method of conducting the tests does not allow extracting all the information available from the experiment.

**.** Indeed, to date, the state of a component is checked at regular intervals searching for an anomaly, while it would be interesting to know the exact instant in which the first anomaly is generated, for two reasons.

**.** First of all, it would be possible to stop the test immediately and free the machine for the next tests.

**.** Moreover, the availability of more accurate data on the instant in which the anomalies are generated, combined with the data related to the operating bench conditions during the test, would allow studying the behavior of the tested item better.

**.** The increased available data (including, for example: number of cycles at which the anomaly occurred, load cycle) would also allow intervening on the most critical areas of the tested component(s) in the design step.

**.** The described use case requires the algorithm, when assessing the images subjected to it as anomalous or not anomalous, to generate false positives as infrequently as possible.

**.** However, the existing *anomaly detection* algorithms can reach the required performance level only with lengthy training and numerous images.

**.** In light of the above, the need is strongly felt today to have methods and systems for detecting in real-time, through the use of artificial intelligence (AI), anomalies of an object subjected to a durability test which are capable of optimizing the resources used in terms of training duration and number of images acquired while maximizing the amount of obtainable information.
EP 3556576 A1 relates to a method and to an apparatus for detecting the presence of defects on the surface of a pneumatic tyre.
Document Batistakis et al: "An AI-based Prediction-as-a-Service Model for Estimating Machine Bearing Health Status in Industry 4.0 5G Applications", 2021 12th International conference on information, Intelligence, Systems & Applications (IISA), IEEE, 12 July 2021, pages 1-8, XP033983850, discloses a prediction-as-a-service model for estimating machine bearing health status in industry 4.0 5G applications based on Deep Neural Networks (DNN).
Document Jan Paul Assendorp: "Deep learning for anomaly detection in multivariate time series data", Masterarbeit, September 2017, XP055735348, discloses a deep learning algorithm for the task of anomaly detection in multivariate sensor data.

### . Summary of the invention

**.** It is the object of the present invention to devise and provide a method for detecting in real-time, through the use of artificial intelligence (AI), anomalies of an object subjected to a durability test which allows at least partially obviating the above complained drawbacks with reference to the prior art, and in particular which is capable of optimizing the resources used in terms of training duration and number of images acquired while maximizing the amount of obtainable information.

**.** Such an object is achieved by a method for detecting in real-time, through the use of artificial intelligence (AI), anomalies of an object subjected to a durability test according to claim 1.

**.** A system for detecting in real-time, through the use of artificial intelligence (AI), anomalies of an object subjected to a durability test adapted to implement the aforesaid method is also an object of the present invention.

**.** Further advantageous embodiments of the method and system are the subject of the respective dependent claims.

### . Brief description of the drawings

**.** Further features and advantages of the method and related system according to the invention will become apparent from the following description of preferred embodiments, given by way non-limiting indication, with reference to the accompanying drawings, in which:
- Figure 1 shows, by means of a block diagram, a system for detecting in real-time, through the use of artificial intelligence (AI), anomalies of an object subjected to a durability test, in accordance with an embodiment of the present invention;
- Figure 2 shows, by means of a block diagram, a system for detecting in real-time, through the use of artificial intelligence (AI), anomalies of an object subjected to a durability test, in accordance with a further embodiment of the present invention;
- Figure 3 shows, by means of a block diagram, a system for detecting in real-time, through the use of artificial intelligence (AI), anomalies of an object subjected to a durability test, in accordance with a further embodiment of the present invention;
- Figure 4 shows, by means of a block diagram, a system for detecting in real-time, through the use of artificial intelligence (AI), anomalies of an object subjected to a durability test, in accordance with a further embodiment of the present invention;
- Figure 5 shows an example of digital image provided as input to a machine learning algorithm, during a training step, according to an embodiment of the method of the invention;
- Figures 6a and 6b each show an example of digital image obtained as output from a process using *data augmentation* techniques, according to an embodiment of the method of the invention;
- Figure 7a shows an example of original digital image overlapped by a chromatic scale indicating the anomaly level detected in each pixel of the image;
- Figure 7b shows an enlargement of Figure 7a;
- Figure 8 shows, from a logical point of view, by means of a functional block diagram, the operation of a method for detecting in real-time, through the use of artificial intelligence (AI), anomalies of an object subjected to a durability test, in accordance with the present invention;
- Figure 9 shows, by means of a block diagram, a training step of the method for detecting in real-time, through the use of artificial intelligence (AI), anomalies of an object subjected to a durability test, in accordance with the present invention;
- Figure 10 shows, by means of a block diagram, a method for detecting in real-time, through the use of artificial intelligence (AI), anomalies of an object subjected to a test on an object, in accordance with the present invention.

**.** It should be noted that equal or similar elements in the drawings will be indicated by the same numeric or alphanumeric numerals.

### . Description of some preferred embodiments

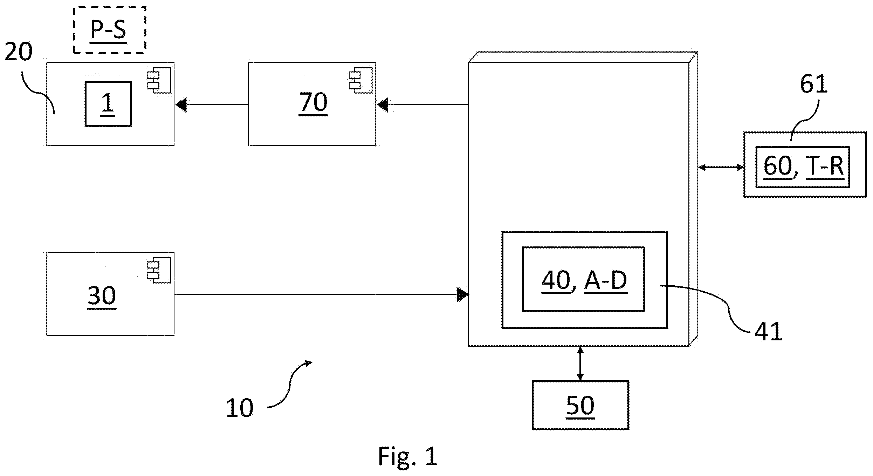

**.** With reference to Figures 1-4, reference numeral 10 indicates as a whole a system for detecting in real-time, through the use of artificial intelligence (AI), anomalies of an object subjected to a durability test, hereinafter also simply detection system or only system, according to the present invention.

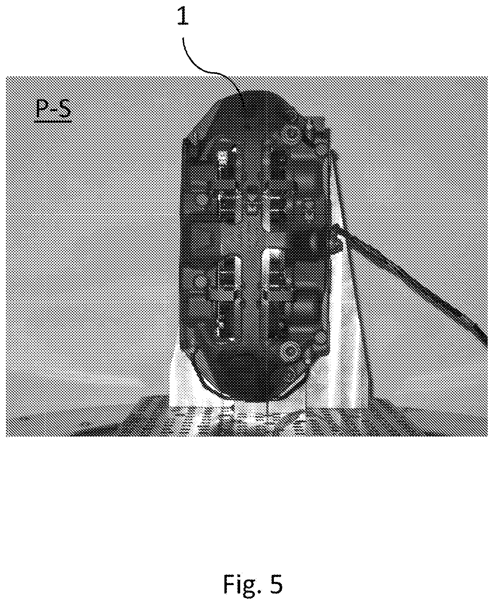

**.** For the purposes of the present description, "object", shown only diagrammatically in Figures 1-4 and indicated by reference numeral 1, means any assembled component usable in a braking system of a vehicle, for example, a brake caliper assembled on a brake disc, such as the one shown in Figures 5, 6a, 6b, 7a and 7b, for example.

**.** For the purposes of the present description, "anomaly" of an object means any undesired change which is visible while inspecting the object being analyzed (whether this be in the shape, appearance or functionalities).

**.** In the specific case of an assembled component usable in a braking system of a vehicle, anomalies are relative to breaks in the functionalities such as, for example, breaks of the spring, breaks of the pin, unscrewing of the bolt, slipping off of the pin.

**.** Other examples of anomalies can be paint corrosion, poorly visible logo, or other types of surface damage.

**.** For the purposes of the present description, "durability test" instead means a resistance test of the object such as, for example, a vibration resistance test or a fatigue resistance test.

**.** In both types of durability test, load cycles are applied to the object, characterized by set sequences in terms of amplitude, frequency of application, and overall duration, which can in turn also be defined in terms of overall number of load cycles.

**.** In greater detail, by way of example:
- in the case of a vibration resistance test, the load cycles applicable to the object include a dynamic test, high application frequency, fast dynamics and short duration (in the order of one or two days);
- in the case of a fatigue resistance test, the load cycles applicable to the object include a slow (almost static) test, low application frequency, negligible dynamics and lengthy duration (about 30 days).

**.** In accordance with the present invention, the system 10 comprises a test bench 20 configured to subject an object 1 to a durability test.

**.** The test bench 20 is controllable by a respective electronic controller (not shown in the drawings) operatively connected to the test bench 20.

**.** In particular, the test bench 20 is controllable by command signals originating from the respective electronic controller which allow stopping or not stopping the test, the test duration, the type of test, and so on.

**.** The system 10 further comprises a digital image acquisition device 30 (for example, a digital camera or a camera) operatively connected to the test bench 20.

**.** The digital image acquisition device 30 is configured to acquire digital images of the object 1 or of a part of the object 1 on which anomalies should be detected. The part of the object 1 could coincide with the whole object 1.

**.** The digital image acquisition device 30 is set to acquire stationary digital images (i.e., not blurred) of the object 1 or of the part of the object 1.

**.** The digital image acquisition device 30 is controlled by an electronic computer (according to different embodiments described below), is programmed with a respective firmware and, for the use thereof, includes setting respective digital image acquisition parameters such as, for example, exposure level and/or time, photograms per second, and so on.

**.** The system 10 further comprises a first data processing unit 40, for example, a m icroprocessor or a microcontroller of a first electronic computer 41, operatively connected to said digital image acquisition device 30.

**.** The first electronic computer 41 is local with respect to the test bench 20 and preferably is an edge type electronic computer.

**.** The image acquisition device 30 is configured to provide the acquired digital images to the first data processing unit 40 operatively connected to said digital image acquisition device 30.

**.** The first data processing unit 40 is configured to execute an anomaly detection algorithm A-D trained by means of artificial intelligence and/or *machine learning* techniques.

**.** The trained anomaly detection algorithm A-D is an inference algorithm such as, for example, the PaDiM *(Patch Distribution Modeling)* algorithm.

**.** Other examples of inference algorithms can be *PatchCore* and *FastFlow.*

**.** The trained anomaly detection algorithm A-D is implemented by the first data processing unit 40 by means of a set convolutional neural network (CNN).

**.** Returning to the invention, the first data processing unit 40 is configured to perform steps of a method for detecting in real-time anomalies of an object subjected to a durability test, described below.

**.** The digital image acquisition device 30 is configured to acquire a digital image of the object 1 or of a part of the object 1 on which anomalies should be detected.

**.** The digital image acquisition device 30 is configured to provide 102 said acquired digital image to the first data processing unit 40.

**.** The first data processing unit 40 is configured to assign, by executing said trained anomaly detection algorithm A-D, to each pixel of the acquired digital image a value representative of a match level (anomaly level) between said pixel and the same pixel of at least one reference digital image representative of a normality condition of the object 1 obtained following the training of said anomaly detection algorithm A-D.

**.** The value representative of a match level (anomaly level) is a value between 0 and 1.

**.** In greater detail, during the analysis (inference), the trained anomaly detection algorithm A-D extracts a plurality of features from a reference digital image of the object 1 by means of the set convolutional neural network.

**.** For the purposes of the present invention, "features" means the mathematical objects (matrices and vectors) describing certain features of a digital image.

**.** By way of example, "high level" features, "intermediate level" features and "low level" features exist in a digital image.

**.** In the case of a convolutional neural network aiming to recognize faces in a digital image, a "low level" feature recognizes lines and edges. "Low level" features are then joined to form "intermediate level" features (for example, by combining edges, shapes are obtained, such as ovals or circles) which are in turn joined to obtain "high level" features, e.g., eyes and mouth (which are fundamental for recognizing a face).

**.** For the purposes of the application of the present invention, "low level" features are used since only the first levels of the set convolutional neural network are considered.

**.** Once the plurality of features are extracted from the reference digital image of the object 1, the trained anomaly detection algorithm A-D determines a series of parameters representative of the distribution of the plurality of features present in the reference digital image representative of a normality condition of the object 1 obtained following the training of said anomaly detection algorithm A-D.

**.** Such a series of parameters are Gaussian distributions, each represented by a respective average and variance, for the purposes of the computation thereof and so on.

**.** During the analysis (inference), the trained anomaly detection algorithm A-D assigns the value representative of an anomaly level to each pixel of the digital image of the object 1 acquired by extracting, by means of the set convolutional neural network, the plurality of features of the acquired digital image of the object 1 and using the series of determined parameters representative of the distribution of the plurality of features present in the reference digital image representative of a normality condition of the object 1 obtained following the training of said anomaly detection algorithm A-D.

**.** In greater detail, the trained anomaly detection algorithm A-D extracts and compares the plurality of features of the acquired digital image of the object 1 with the series of parameters (regular Gaussian distributions) described above and calculates the distance from normality using appropriate mathematical formulas (for example, the percentile of a distribution).

**.** Since many different features are present in the plurality of features and given that many Gaussian distributions are present, the trained anomaly detection algorithm A-D calculates an average of the distances calculated and executes a further normalization to obtain a value between 0 and 1 representative of the match level (anomaly level).

**.** The value representative of a match level between said pixel and the same pixel of the at least one reference digital image can be a color in a color scale which goes from a lighter color, e.g., yellow, to a darker color, e.g., blue.

**.** In this example, the lighter color represents a low match level while the darker color represents a high match level.

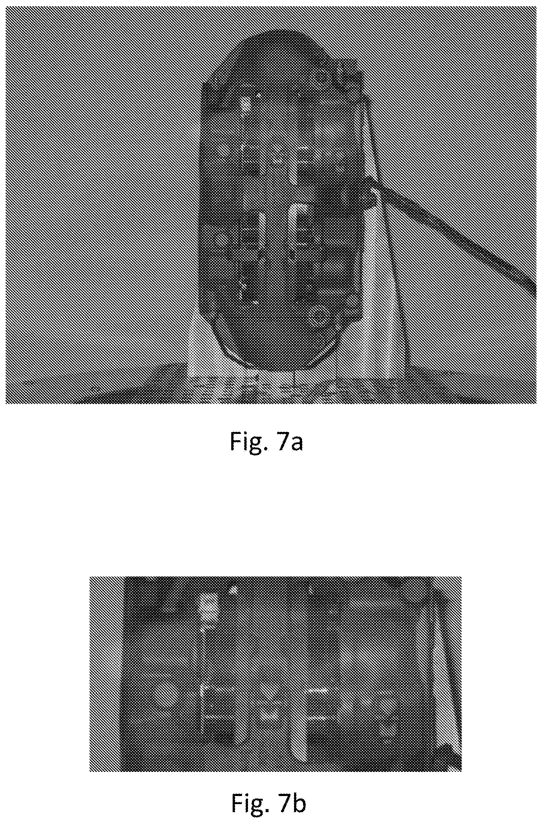

**.** An example of an acquired digital image of the object 1 overlapped by a color scale of the type described above is shown in Figure 7a and in the respective enlargement shown in Figure 7b.

**.** The lighter portions of the object 1 in Figures 7a and 7b are the portions in which more anomalies were detected during the durability test.

**.** The first data processing unit 40 is further configured to compare, by executing said trained anomaly detection algorithm A-D, the value assigned to each pixel of the acquired digital image with a set first threshold value.

**.** If the assigned value is lower than the set first threshold value, the first data processing unit 40 is configured to assign a normality condition to the pixel.

**.** If the assigned value is higher than the set first threshold value, the first data processing unit 40 is configured to assign an anomaly condition to the pixel.

**.** The first data processing unit 40 is configured to assign, by executing said trained anomaly detection algorithm A-D, to the acquired digital image a normality or anomaly condition based on the condition assigned to each pixel of the acquired digital image.

**.** If the number of pixels to which the anomaly condition was assigned is higher than a set second threshold value and the pixel surface density to which an anomaly condition was assigned is higher than a set third threshold value, the first data processing unit 40 is configured, by executing said trained anomaly detection algorithm A-D, to assign the anomaly condition to the acquired digital image.

**.** If the number of pixels to which the anomaly condition was assigned is lower than the set second threshold value or the pixel surface density to which the anomaly condition was assigned is lower than a set third threshold value, the first data processing unit 40 is configured, by executing said trained anomaly detection algorithm A-D, to assign the normality condition to the acquired digital image.

**.** The set first threshold value, the set second threshold value and the set third threshold value depend on the specific case of use and therefore are set suitably from one case to the next.

**.** The set second threshold value and the set third threshold value are alternative to each other.

**.** In greater detail:
- the set first threshold value is representative of a match level considered acceptable, therefore a value between 0 and 1, for example, equal to 0.7;
- the set second threshold value is an (absolute) minimum number of pixels which depends on the size of the anomaly to be detected, therefore it generally is a number between 100 and 1000;
- the set third threshold value is a number of pixels which depends on the overall number of pixels of the digital image, e.g., 1000/(1024x1024). The set third threshold value is an agnostic value with respect to the resolution of the digital image.

**.** In accordance with an embodiment, the first data processing unit 40 is configured, by executing said trained anomaly detection algorithm A-D, to continue with the durability test of the object 1 if the normality condition was assigned to the acquired digital image, by performing step a) to acquire a next digital image of the object (1) and steps b) - e) on the next acquired digital image.

**.** In accordance with an embodiment, in combination with the preceding one, the first data processing unit 40 is configured to interrupt the durability test of the object 1 (stop test bench) if the anomaly condition was assigned to the acquired digital image.

**.** In an embodiment, in combination with the preceding one, the first data processing unit 40 is configured to send a respective message (for example, via email) to an operator of the test bench 20 when the durability test is interrupted.

**.** In an embodiment, in combination with the preceding ones including the interruption of the durability test, the first data processing unit 40 is configured to store first information representative of the interrupted durability test in a first memory unit 50 (diagrammatically shown in Figures 1-4) operatively connected to the first data processing unit 40.

**.** Such first information representative of the interrupted durability test comprises:
- data relative to the settings (setups) of the test bench 20;
- time trend of operating conditions generated during the test such as, for example, in the case of a vibration resistance test, vibration frequency, vibration amplitude, number of cycles during the test, and so on;
- number of test load cycles (for example, 80,000 out of 100,000 included) in which the anomaly was detected and the control has generated a positive result;
- instant of time the first anomaly is detected;
- position of the anomaly in the digital image;
- digital image on which the control generating the interruption of the durability test of the object 1 (stop test bench) was performed.

**.** In accordance with an embodiment, in combination with any of the preceding ones, the first data processing unit 40 is configured to end, in the absence of acquired digital images to which the anomaly condition was assigned, the durability test of the object 1 when a set test time duration value is reached, set (for example, by an operator) during the setup of the test bench 20.

**.** By way of example, the set test time duration value can be between 24 and 28 hours.

**.** In accordance with an embodiment, in combination with the preceding one, the first data processing unit 40 is configured to store second information representative of the ended durability test in the first memory unit 50 operatively connected to the data processing unit 40.

**.** Such second information representative of the ended durability test comprises:
- data relative to the settings (setups) of the test bench 20;
- time trend of operating conditions generated during the test such as, for example, in the case of a vibration resistance test, vibration frequency, vibration amplitude, number of cycles during the test, and so on.

**.** With reference again to Figures 1-4, the system 10 further comprises a second data processing unit 60 (for example, a microprocessor or a microcontroller of a second electronic computer 61) configured to perform steps of the method for detecting in real-time anomalies of an object subjected to a durability test in accordance with the present invention, described below.

**.** The second electronic computer 61 is remote with respect to the test bench 20.

**.** The second data processing unit 60 is further configured to train, by means of a respective training algorithm T-R, the anomaly detection algorithm A-D in a set initial time interval of the durability test to which the object 1 to be examined is subjected.

**.** The training algorithm T-DR is implemented by the second data processing unit 60 by means of the set convolutional neural network.

**.** The training executable by the training algorithm T-R allows modifying the series of parameters of the trained anomaly detection algorithm A-D used to assign an anomaly level to each pixel of the digital image of the object 1 during the analysis (inference).

**.** The set initial time interval (training time) is in the order of minutes up to a maximum of 15 minutes, e.g., 10 minutes; a maximum of 5 minutes for acquiring digital images of the object 1 and a maximum of 5 minutes for training the anomaly detection algorithm A-D. The training of the anomaly detection algorithm A-D could occur also in a shorter time, for example, equal to 2 minutes.

**.** In greater detail, in this training step, the second data processing unit 60 is configured to acquire, by means of the digital image acquisition device 30 operatively connected to the second data processing unit 60, a plurality of digital images of the object 1.

**.** An example of acquired digital image of the object 1 during the training of the anomaly detection algorithm A-D is shown in Figure 5.

**.** The second data processing unit 60 is configured to process said plurality of acquired digital images of the object 1.

**.** In an embodiment, the second data processing unit 60 is configured to perform, using *data augmentation* techniques, a first processing of said plurality of acquired digital images of the object 1.

**.** In particular, the first processing consists in applying rules for changing luminosity and contrast to the acquired digital image so that it becomes compatible with a change in luminosity already experimented during the durability test which includes, for example, a change in intensity and/or color of the natural light, in addition to a possible switch from natural light to artificial light.

**.** In an embodiment, in combination with the preceding one, the second data processing unit 60 is configured to perform a second processing of said plurality of acquired digital images of the object 1, already subjected to the first processing.

**.** For example, this second processing consists in identifying, in the acquired digital image already subjected to the first processing, portions of the object 1 to be subjected to examination during the durability test (i.e., portions of the object 1 in which anomalies should be detected), excluding other portions of the object 1 not to be subjected to examination during the durability test (i.e., portions of the object 1 in which it is not necessary to detect anomalies).

**.** In other words, the identification obtainable with this second processing consists in isolating or surrounding, in the acquired digital image, portions of the object 1 in which anomalies are to be detected, instead excluding other portions of the object 1 in which it will be of no interest to detect anomalies.

**.** For example, in a digital image comprising a brake caliper and a background, the second processing allows identifying, as a portion of the digital image of the object 1 to be subjected to the test, only the portion corresponding to the brake caliper.

**.** Generally, processing the plurality of acquired digital images of the object 1 (first processing and possibly second processing) includes using the set convolutional neural network which is, for example, a network trained on a tagged public dataset of common digital images and to which weights are assigned to the network nodes provided in free repositories available online.

**.** Returning in general to the present invention, the second data processing unit 60 is configured to provide said plurality of processed digital images of the object 1 to the anomaly detection algorithm A-D to be trained.

**.** It should be noted that if the anomaly detection algorithm A-D is a PaDiM algorithm, the selection of such a type of algorithm, in addition to its implementation in an edge type electronic computer, described below, advantageously allows ensuring satisfactory time performance for the training.

**.** For example, if it is the PaDiM algorithm, the anomaly detection algorithm A-D is capable of processing three photograms per second (fps), while the duration of the training is maximum two minutes.

**.** The set convolutional neural network at the basis of the anomaly detection algorithm A-D, during training, is configured to learn to recognize a plurality of features extractable from the set convolutional neural network for each portion or patch of a digital image.

**.** In greater detail, for each digital image an iteration (i.e., an inference) is performed on the set convolutional neural network at the basis of the anomaly detection algorithm A-D which affects, with suitable weight, the aforesaid plurality of features.

**.** The set convolutional neural network determines a series of parameters representative of the distribution of the plurality of features present in the reference digital image representative of a normality condition of the object 1 acquired during the training of said anomaly detection algorithm A-D.

**.** At the end of the training, the aforesaid series of parameters of each feature is obtained for each portion or patch of the acquired and processed digital image.

**.** This type of training is also defined as "online" training because the data required for the training become available in a sequential order and at each passage (i.e., for each acquired digital image), the parameters of the anomaly detection algorithm A-D are updated.

**.** It should also be noted that the inclusion in the reference dataset of digital images subjected to the first processing and the second processing, described above in accordance with an embodiment, is decisive for improving the judgement performance of the trained anomaly detection algorithm A-D.

**.** The plurality of processed digital images of the object 1 represents a plurality of reference digital images usable by the first data processing unit 40, by means of the trained anomaly detection algorithm A-D, for detecting anomalies of the object subjected to the durability test.

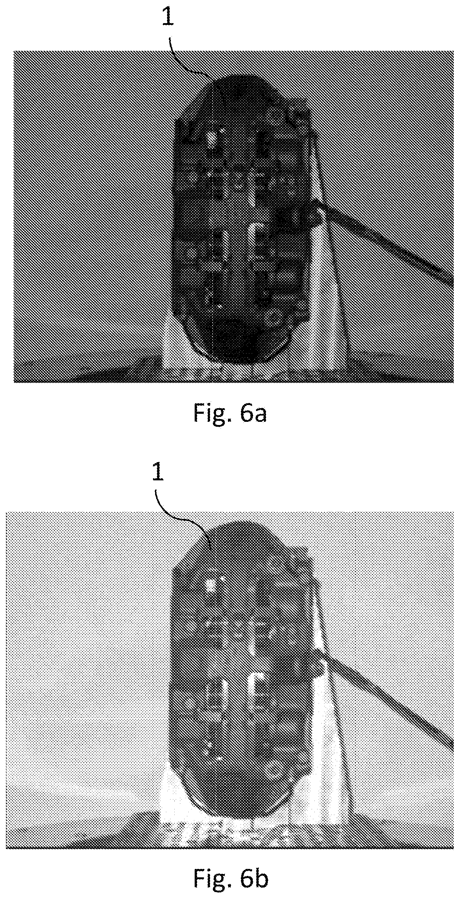

**.** Examples of processed digital images of the object 1 are shown in Figures 6a and 6b.

**.** Returning to the system 10 from an architectural viewpoint, in accordance with an embodiment, in combination with any of the ones described above and shown in dashed lines in Figures 1-4, the system 10 further comprises a uniform background panel P-S arranged on the test bench 20 in opposite position to the digital image acquisition device 30.

**.** The uniform background panel P-S can be a neutral-colored panel (e.g., white).

**.** The uniform background panel P-S advantageously allows obtaining a frame of the object 1 and clearer and cleaner acquired digital images of the object 1.

**.** An example of digital image of the object 1 acquired under the conditions described above is again shown in Figure 5.

**.** In accordance with an embodiment, in combination with any of the preceding ones and shown in Figures 1, 3 and 4, the system 10 comprises a connection device 70, for example, of the USB relay type, interposed between the test bench 20 and a data communication network (not shown in the drawings) to which the test bench 20 is connected.

**.** For example, the connection device 70 is interposed between the test bench 20 and the first data processing unit 40 (i.e., the first electronic computer 41).

**.** The connection device 70 is configured to control an electrical control signal in input to the test bench 20.

**.** If said electrical control signal is lower than or equal to a set limit threshold value, the system 10 is configured to stop the operation of the test bench 20.

**.** For example, the electrical control signal in input to the test bench 20 is equal to 5 V and the set limit threshold value is equal to 1 V.

**.** In an embodiment, in combination with any of the preceding ones and shown in Figure 1, the data processing unit 40 (i.e., the first electronic computer 41, for example, an edge type electronic computer) is configured to execute the trained anomaly detection algorithm A-D (as already described above), control the digital image acquisition device 30, control the electrical control signal in input to the test bench 20 provided by the connection device 70.

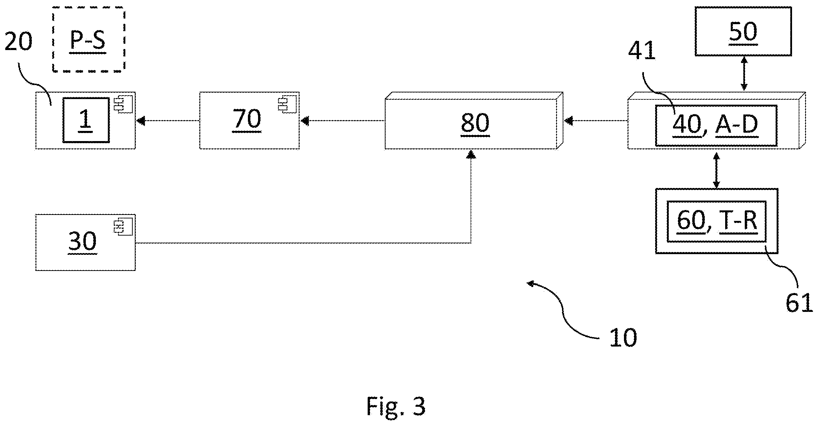

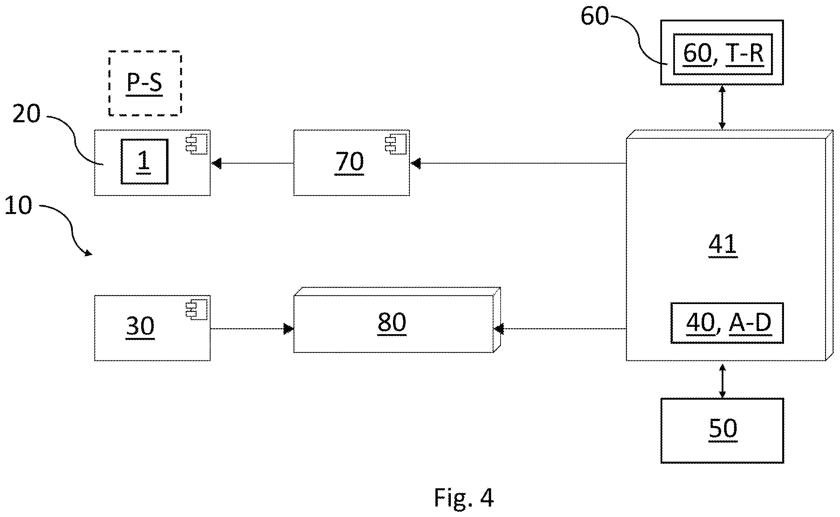

**.** In accordance with an embodiment, in combination with any of the preceding ones in which the connection device 70 is present and shown in Figures 3 and 4, the system 10 comprises an electronic bench computer 80 directly connected to the digital image acquisition device 30 and operatively connected to the first data processing unit 40.

**.** In this embodiment, the electronic bench computer 80 is configured to store the digital images acquired from the digital image acquisition device 30.

**.** In an embodiment, the first electronic computer 41, comprising the first data processing unit 40, which represents a virtual machine, is a remote electronic computer with respect to the test bench 20, for example, a company network server or cloud.

**.** In an embodiment, shown in Figure 3, the first data processing unit 41 is configured to control the storage in the electronic bench computer 80 of new digital images acquired from the digital image acquisition device 30.

**.** In this embodiment, the electronic bench computer 80 is directly connected to the connection device 70 and is configured to control the electrical control signal in input to the test bench 20.

**.** In an embodiment, alternative to the preceding one and shown in Figure 4, the first electronic computer 41 is directly connected to the connection device 70 and the first data processing unit 40 is configured to control the electrical control signal in input to the test bench 20.

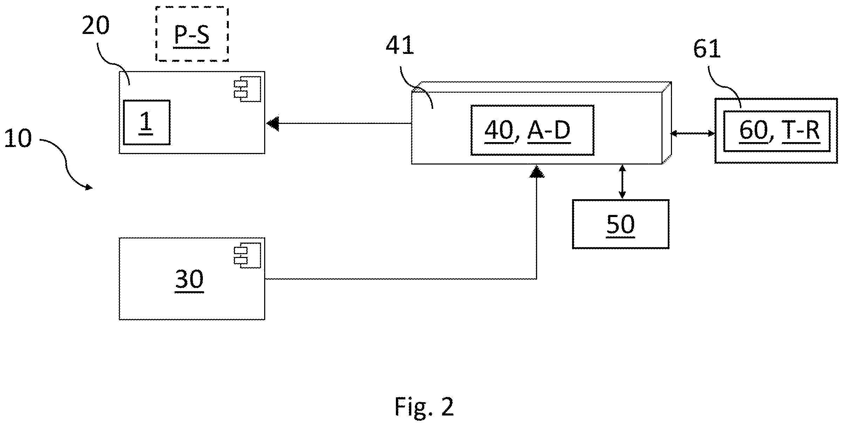

**.** In accordance with an embodiment, alternative to any of the preceding ones in which the connection device 70 is not present and the electronic bench computer 80, shown in Figure 2, is not present, the system 10 comprises an on-board electronic bench board on which the first data processing unit 40 is installed.

**.** Therefore, the on-board electronic bench board can be considered equal to the first electronic computer 41, defined above.

**.** The on-board electronic bench board is directly connected to the test bench 20 and directly connected to the digital image acquisition device 30.

**.** In this embodiment, the first data processing unit 40 is configured to control the image acquisition device 30.

**.** In this embodiment, the on-board electronic bench board comprises a plurality of pins (i.e., copper wires with an electric voltage set by the on-board electronic bench board) controlled by software by the on-board electronic bench board, configured to set or acquire a digital electronic signal equal to 3.3 V or 5 V, for example.

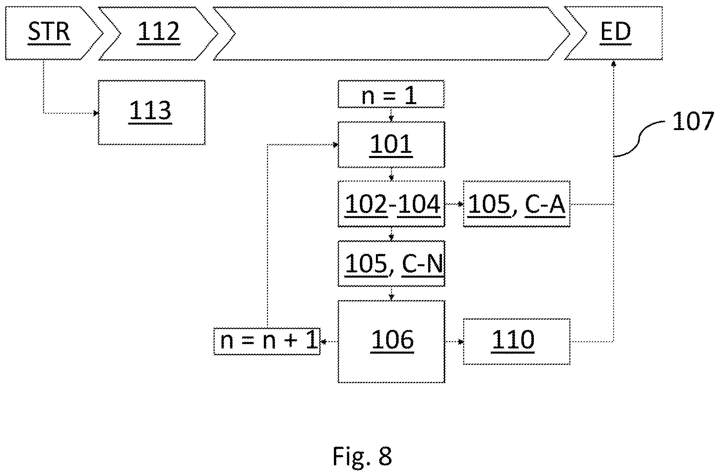

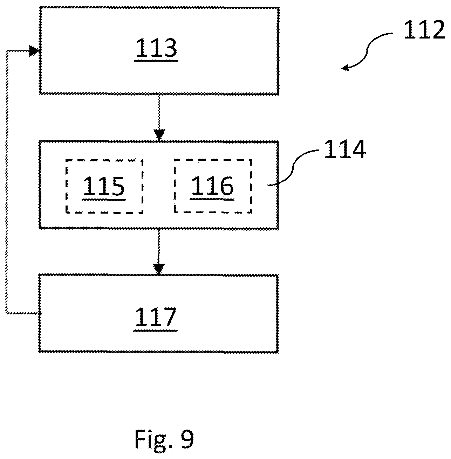

**.** With reference to the aforesaid drawings and block diagrams in Figures 8-10, there is described a method 100 for detecting in real-time anomalies of an object 1 subjected to a durability test, hereinafter also only detection method or simply method, according to the present invention.

**.** It should be noted that the components and information mentioned below with the description of the method have already been described above with reference to the system 10 and therefore will not be repeated for brevity.

**.** The method 100 comprises a symbolic step of starting STR.

**.** The method 100 comprises a step of a) acquiring 101, by a digital image acquisition device 30 operatively connected to a test bench 20, a digital image of the object 1 or of a part of the object 1 (Figure 8: n = 1) on which anomalies should be detected.

**.** The method 100 comprises a step of b) providing 102, by the image acquisition device 30, said acquired digital image to a first data processing unit 40 operatively connected to said digital image acquisition device 30 and adapted to execute an anomaly detection algorithm A-D trained by means of artificial intelligence and/or machine learning techniques.

**.** The method 100 comprises a step of c) assigning 103, by said first data processing unit 40 by executing said trained anomaly detection algorithm A-D, to each pixel of the acquired digital image a value representative of a match level (anomaly level) between said pixel and the same pixel of at least one reference digital image representative of a normality condition of the object 1 obtained following the training of said anomaly detection algorithm A-D.

**.** The method 100 further comprises a step of d) comparing 104, by said first data processing unit 40 by executing said trained anomaly detection algorithm A-D, the value assigned to each pixel of the acquired digital image with a set first threshold value.

**.** If the assigned value is lower than the set first threshold value, a normality condition is assigned to the pixel.

**.** If the assigned value is higher than the set first threshold value, an anomaly condition is assigned to the pixel.

**.** The method 100 further comprises a step of e) assigning 105, by said first data processing unit 40 by executing said trained anomaly detection algorithm A-D, to the acquired digital image a normality or anomaly condition based on the condition assigned to each pixel of the acquired digital image.

**.** If the number of pixels to which the anomaly condition was assigned is higher than a set second threshold value and the pixel surface density to which an anomaly condition was assigned is higher than a set third threshold value, the anomaly condition C-A is assigned to the acquired digital image.

**.** If the number of pixels to which the anomaly condition was assigned is lower than the set second threshold value or the pixel surface density to which the anomaly condition was assigned is lower than a set third threshold value, the normality condition C-N is assigned to the acquired digital image.

**.** The method 100 then comprises a symbolic step of ending ED.

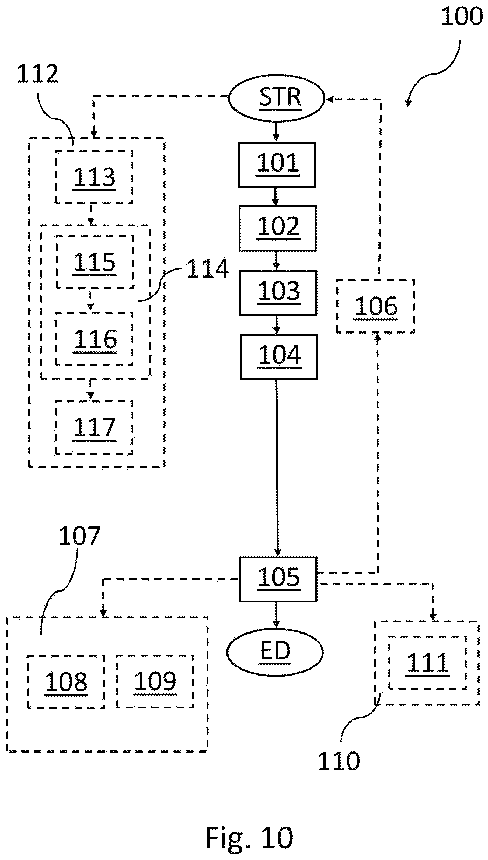

**.** In accordance with an embodiment shown in dashed lines in Figure 10, the method 100 comprises a step of continuing 106, by the first data processing unit 40, with the durability test of the object 1 if the normality condition was assigned to the acquired digital image, by performing step a) to acquire a next digital image of the object 1 and steps b) - e) on the next acquired digital image (Figure 8: n = n+1).

**.** In accordance with an embodiment, in combination with any of the preceding ones and shown in dashed lines in Figure 10, the method 100 comprises a step of interrupting 107, by the first data processing unit 40, the durability test of the object 1 if the anomaly condition was assigned to the acquired digital image.

**.** In accordance with an embodiment, in combination with the preceding one and shown in dashed lines in Figure 10, the step of interrupting 107 the durability test of the object comprises a step of sending 108, by the first data processing unit 40, a respective message (e.g., an email) to an operator of the test bench 20.

**.** In accordance with an embodiment, in combination with any of the preceding ones including the interruption of the durability test and shown in dashed lines in Figure 10, the step of interrupting 107 the durability test of the object comprises a step of storing 109, by the first data processing unit 40, first information representative of the interrupted durability test in a first memory unit 50 operatively connected to the first data processing unit 40.

**.** In accordance with an embodiment, in combination with any of the preceding ones and shown in dashed lines in Figure 10, the method 100 comprises, in the absence of acquired digital images to which the anomaly condition is assigned, a step of ending 110, by the first data processing unit 40, the durability test of the object 1 when a set test time duration value, set during the test bench setup, is reached.

**.** In accordance with an embodiment, in combination with the preceding one and shown in dashed lines in Figure 10, the step of ending 110 the durability test of the object 1 comprises a step of storing 111, by the first data processing unit 40, second information representative of the ended durability test in the first memory unit 50 operatively connected to the first data processing unit 40.

**.** In accordance with an embodiment, in combination with any of the preceding ones and shown in dashed lines in Figure 10, the method 100 comprises a step of f) training 112, by a second data processing unit 60, by means of a respective training algorithm T-R, said anomaly detection algorithm A-D in a set initial time interval of the durability test to which the object to be examined is subjected.

**.** In accordance with an embodiment, in combination with the preceding one and shown in dashed lines in Figure 10, the step of g) training 112 comprises a step of f1) acquiring 113, by the second data processing unit 60, by means of the digital image acquisition device 30 operatively connected to the second data processing unit 60, a plurality of digital images of the object.

**.** Moreover, in this embodiment shown in dashed lines in Figure 10, the step of f) training 112 comprises a step of f2) processing 114, by the second data processing unit 60, said plurality of acquired digital images of the object 1.

**.** Greater details of the processing, according to embodiments, were provided above.

**.** In an embodiment, the step of f2) processing 114 comprises a step of performing 115, by the second data processing unit 60, using *data augmentation* techniques, a first processing of said plurality of acquired digital images of the object 1.

**.** As already mentioned above, the first processing consists in applying rules for changing luminosity and contrast to the acquired digital image so that it becomes compatible with a change in luminosity already experimented during the durability test which includes, for example, a change in intensity and/or color of the natural light, in addition to a possible switch from natural light to artificial light.

**.** In an embodiment, in combination with the preceding one, the step of f2) processing 114 comprises a step of performing 116, by the second data processing unit 60, a second processing of said plurality of acquired digital images of the object 1, already subjected to the first processing.

**.** For example, as already mentioned above, this second processing consists in identifying (i.e. isolating or outlining), in the acquired digital image already subjected to the first processing, portions of object 1 to be subjected to examination during the durability test (i.e. portions of the object 1 in which anomalies should be detected), excluding other portions of the object 1 not to be subjected to examination during the durability test (i.e. portions of the object 1 in which it is not necessary to detect anomalies).

**.** Moreover, in this embodiment shown in dashed lines in Figure 10, the step of g) training 112 comprises a step of g3) providing 117, by the second data processing unit 60, said plurality of processed digital images of the object 1 to the anomaly detection algorithm A-D to be trained.

**.** The plurality of processed digital images of the object 1 represents a plurality of reference digital images usable by the first data processing unit 40, by means of the trained anomaly detection algorithm A-D, for detecting anomalies of the object subjected to the durability test.

**.** With reference now to the Figures, there is now described an implementation example of the method for detecting in real-time anomalies of an object subjected to a durability test, according to the present invention.

**.** An object 1 is arranged on a test bench 20 for a durability test, e.g., a vibration resistance test.

**.** The object 1 is arranged between a uniform background panel P-S and a digital image acquisition device 30.

**.** Prior to the start of the test, an operator sets a load profile to which the object 1 is to be subjected during the vibration resistance test, i.e., the operator sets the duration of the test, the vibration frequency, type of vibration, and so on.

**.** It is at this point, in a set initial time interval (e.g., 10 minutes) of the vibration resistance test, that the anomaly detection algorithm A-D is trained, which algorithm will then be implemented by a first data processing unit 40 during the vibration resistance test.

**.** In greater detail, a second data processing unit 60 of a remote electronic computer 61 with respect to the trained test bench 20 trains the anomaly detection algorithm A-D by means of a respective training algorithm T-R.

**.** The training algorithm T-DR is implemented by the second data processing unit 60 by means of a set convolutional neural network (for example, a network trained on a tagged public dataset of common digital images and to which weights are assigned to the network nodes provided in free repositories available online).

**.** During training, the training algorithm T-R modifies a series of parameters of the anomaly detection algorithm A-D.

**.** In greater detail, in this training step, the second data processing unit 60 acquires, by means of the digital image acquisition device 30 operatively connected to the second data processing unit 60, a plurality of digital images of the object 1.

**.** The second data processing unit 60 processes, by means of the training algorithm T-R and using *data augmentation* techniques implemented on the set convolutional neural network, said plurality of acquired digital images of the object 1.

**.** In particular, the second data processing unit 60 performs a first processing of said plurality of acquired digital images of the object 1 in which occurs the change in illumination of the acquired digital image so that it is compatible with a change in luminosity already experimented during the durability test (for example, a change in intensity and/or color of the natural light, in addition to a possible switch from natural light to artificial light).

**.** Moreover, the second data processing unit 60 performs a second processing of said plurality of acquired digital images of the object 1 already the subject of the first processing, highlighting in the acquired digital image the subject of the first processing, portions of the object 1 to be subjected to examination during the durability test (i.e. portions of the object 1 in which anomalies should be detected), excluding other portions of the object 1 not to be subjected to examination during the durability test (i.e. portions of the object 1 in which it is not necessary to detect anomalies).

**.** The second data processing unit 60 provides said plurality of processed digital images of object 1 to the anomaly detection algorithm A-D.

**.** Once training has ended, the detecting in real-time of anomalies of the object 1 subjected to the vibration resistance test, starts.

**.** The digital image acquisition device 30 operatively connected to the test bench 20, acquires a digital image of the object 1 or of a part of the object 1 on which anomalies should be detected.

**.** The image acquisition device 30 provides said acquired digital image to the first data processing unit 40 operatively connected to said digital image acquisition device 30 and adapted to execute the anomaly detection algorithm A-D trained by means of artificial intelligence and/or machine learning techniques.

**.** The first data processing unit 40 compares, by executing said trained anomaly detection algorithm A-D, the acquired digital image with at least one reference digital image representative of a normality condition of the object 1 obtained following the training of said anomaly detection algorithm A-D.

**.** The first data processing unit 40, by executing said trained anomaly detection algorithm A-D, assigns to each pixel of the acquired digital image a value representative of a match level between said pixel and the same pixel of the at least one reference digital image.

**.** The first data processing unit 40, by executing said trained anomaly detection algorithm A-D, compares the value assigned to each pixel of the acquired digital image with a set first threshold value.

**.** If the assigned value is lower than the set first threshold value, a normality condition C-N is assigned to the pixel.

**.** If the assigned value is higher than the set first threshold value, an anomaly condition C-A is assigned to the pixel.

**.** The first data processing unit 40, by executing said trained anomaly detection algorithm A-D, assigns to the acquired digital image a normality C-N or anomaly C-A condition based on the condition assigned to each pixel of the acquired digital image.

**.** In greater detail:
**.** if the number of pixels to which the anomaly condition C-A was assigned is higher than a set second threshold value and the pixel surface density to which an anomaly condition C-A was assigned is higher than a set third threshold value, the first data processing unit 40 assigns the anomaly condition C-A to the acquired digital image;
**.** if the number of pixels to which the anomaly condition C-A was assigned is lower than the set second threshold value or the pixel surface density to which the anomaly condition C-A was assigned is lower than a set third threshold value, the first data processing unit 40 assigns the normality condition C-N to the acquired digital image.

**.** The first data processing unit 40 continues the durability test of the object 1 if the normality condition C-N was assigned to the acquired digital image, acquiring a next digital image of the object 1 and performing the operations described above on the next acquired digital image.

**.** If the anomaly condition C-A was assigned to the acquired digital image, the first data processing unit 40 interrupts the durability test of the object 1 by sending a respective alarm message to an operator of the test bench 20 and storing first information representative of the interrupted durability test in a first memory unit 50 operatively connected to the first data processing unit 40.

**.** As can be appreciated, the object of the present invention is fully achieved.

**.** By utilizing the potential of artificial intelligence, in particular an anomaly detection algorithm trained by means of artificial intelligence techniques, the method and system of the present invention allow automating the test, making the experiment more efficient in terms of used resources and maximizing the amount of extracted information.

**.** Moreover, using an anomaly detection algorithm with respect to an object detection algorithm in a test bench to perform fatigue resistance tests advantageously allows avoiding a step of tagging digital images of an object to train the algorithm.

## Claims

1. A method (100) for detecting in real-time anomalies of an object (1) subjected to a durability test, comprising, while performing a durability test on a test bench (20), the steps of:
a) acquiring (101), by a digital image acquisition device (30) operatively connected to the test bench (20), a digital image of the object (1) or of a part of the object (1) on which anomalies should be detected;
**characterised by** comprising:
b) providing (102), by the image acquisition device (30), said acquired digital image to a first data processing unit (40) operatively connected to said digital image acquisition device (30) and adapted to execute an anomaly detection algorithm (A-D) trained by means of artificial intelligence and/or *"machine learning"* techniques;
c) assigning (103), by said first data processing unit (40) by executing said trained anomaly detection algorithm (A-D), to each pixel of the acquired digital image a value representative of a match level between said pixel and the same pixel of at least one reference digital image representative of a normality condition of the object (1) obtained upon training said anomaly detection algorithm (A-D);
d) comparing (104), by said first data processing unit (40) by executing said trained anomaly detection algorithm (A-D), the value assigned to each pixel of the acquired digital image with a set first threshold value,
if the assigned value is lower than the set first threshold value, a normality condition (C-N) is assigned to the pixel,
if the assigned value is higher than the set first threshold value, an anomaly condition (C-A) is assigned to the pixel;
e) assigning (105), by said first data processing unit (40) by executing said trained anomaly detection algorithm (A-D), to the acquired digital image a normality (C-N) or anomaly (C-A) condition based on the condition assigned to each pixel of the acquired digital image,
if the number of pixels to which the anomaly condition (C-A) was assigned is higher than a set second threshold value and the pixel surface density to which an anomaly condition (C-A) was assigned is higher than a set third threshold value, assigning the anomaly condition (C-A) to the acquired digital image,
if the number of pixels to which the anomaly condition (C-A) was assigned is lower than the set second threshold value or the pixel surface density to which an anomaly condition (C-A) was assigned is lower than the set third threshold value, assigning the normality condition (C-N) to the acquired digital image.

2. The method (100) according to claim 1, comprising a step of continuing (106), by the first data processing unit (40), with the durability test of the object (1) if the normality condition (C-N) was assigned to the acquired digital image, by performing step a) to acquire a next digital image of the object (1) and steps b) - e) on the next acquired digital image.

3. The method (100) according to claim 1 or 2, comprising a step of interrupting (107), by the first data processing unit (40), the durability test of the object (1) if the anomaly condition (C-A) was assigned to the acquired digital image.

4. The method (100) according to claim 3, wherein the step of interrupting (107) the durability test of the object comprises a step of sending (108), by the first data processing unit (40), a respective message to an operator of the test bench (20).

5. The method (100) according to claim 3 or 4, wherein the step of interrupting (107) the durability test of the object comprises a step of storing (109), by the first data processing unit (40), first information representative of the interrupted durability test in a first memory unit (50) operatively connected to the first data processing unit (40).

6. The method (100) according to any one of the preceding claims, comprising, in the absence of acquired digital images to which the anomaly condition (C-A) is assigned, a step of ending (110), by the first data processing unit (40), the durability test of the object (1) when a set test time duration value, set during the test bench setup, is reached.

7. The method (100) according to claim 6, wherein the step of ending (110) the durability test of the object (1) comprises a step of storing (111), by the first data processing unit (40), second information representative of the ended durability test in the first memory unit (50) operatively connected to the first data processing unit (40).

8. The method (100) according to any of the preceding claims, comprising a step of f) training (112), by a second data processing unit (60), by means of a respective training algorithm (T-R), said anomaly detection algorithm (A-D) in a set initial time interval of the durability test to which the object (1) to be examined is subjected.

9. The method (100) according to claim 8, wherein the step f) of training (112) comprises steps of:
f1) acquiring (113), by the second data processing unit (60) by means of the digital image acquisition device (30) operatively connected to the second data processing unit (60), a plurality of digital images of the object (1);
f2) processing (114), by the second data processing unit (60), said plurality of acquired digital images of the object (1);
f3) providing (117), by the second data processing unit (60), said plurality of processed digital images of the object (1) to the anomaly detection algorithm (A-D) to be trained, said preliminary plurality of processed digital images of the object (1) representing a plurality of reference digital images usable by the first data processing unit (40), by means of the trained anomaly detection algorithm (A-D), for detecting anomalies of the object subjected to the durability test.

10. A system (10) for detecting in real-time anomalies of an object (1) subjected to a durability test on a test bench (20), comprising:
- a test bench (20) configured to subject an object (1) to a durability test;
- a digital image acquisition device (30), operatively connected to the test bench (20), configured to acquire digital images of the object (1) or of a part of the object (1) on which anomalies should be detected;
- a first data processing unit (40) operatively connected to said digital image acquisition device (30) and configured to execute an anomaly detection algorithm (A-D) trained by means of artificial intelligence and/or *"machine learning"* techniques;
the first data processing unit (40) being configured to perform a method for detecting in real-time anomalies of an object (1) subjected to a durability test according to any one of the preceding claims 1 to 6.

11. The system (200) according to claim 10, further comprising a second data processing unit (60) configured to perform steps of the method for detecting real-time anomalies of an object (1) subjected to durability test according to any one of the preceding claims 8 to 9.

## Patentansprüche

1. Verfahren (100) zur Echtzeiterkennung von Anomalien eines Objekts (1), das einem Dauerhaftigkeitstest unterzogen wird, umfassend, während der Durchführung eines Dauerhaftigkeitstests auf einem Prüfstand (20), die Schritte:
a) Erfassen (101), durch eine mit dem Prüfstand (20) funktional verbundene digitale Bilderfassungsvorrichtung (30), eines digitalen Bildes des Objekts (1) oder eines Teils des Objekts (1), an dem Anomalien erkannt werden sollen;
**dadurch gekennzeichnet, dass** es umfasst:
b) Bereitstellen (102), durch die Bilderfassungsvorrichtung (30), des erfassten digitalen Bildes an eine erste Datenverarbeitungseinheit (40), die funktional mit der digitalen Bilderfassungsvorrichtung (30) verbunden und dazu geeignet ist, einen mittels Techniken der künstlichen Intelligenz und/oder des "maschinellen Lernens" trainierten Anomalieerkennungsalgorithmus (A-D) auszuführen;
c) Zuweisen (103), durch die erste Datenverarbeitungseinheit (40) durch Ausführen des trainierten Anomalieerkennungsalgorithmus (A-D), eines Wertes zu jedem Pixel des erfassten digitalen Bildes, der repräsentativ für ein Übereinstimmungsniveau zwischen dem Pixel und demselben Pixel mindestens eines digitalen Referenzbildes ist, das repräsentativ für einen Normalitätszustand des Objekts (1) ist, der beim Trainieren des Anomalieerkennungsalgorithmus (A-D) erhalten wurde;
d) Vergleichen (104), durch die erste Datenverarbeitungseinheit (40) durch Ausführen des trainierten Anomalieerkennungsalgorithmus (A-D), des jedem Pixel des erfassten digitalen Bildes zugewiesenen Wertes mit einem festgelegten ersten Schwellenwert,
wenn der zugewiesene Wert niedriger als der festgelegte erste Schwellenwert ist, wird dem Pixel ein Normalitätszustand (C-N) zugewiesen,
wenn der zugewiesene Wert höher als der festgelegte erste Schwellenwert ist, wird dem Pixel ein Anomaliezustand (C-A) zugewiesen;
e) Zuweisen (105), durch die erste Datenverarbeitungseinheit (40) durch Ausführen des trainierten Anomalieerkennungsalgorithmus (A-D), eines Normalitäts- (C-N) oder Anomaliezustands (C-A) zu dem erfassten digitalen Bild basierend auf dem jedem Pixel des erfassten digitalen Bildes zugewiesenen Zustand,
wenn die Anzahl der Pixel, denen der Anomaliezustand (C-A) zugewiesen wurde, höher als ein festgelegter zweiter Schwellenwert ist und die Pixelflächendichte, der ein Anomaliezustand (C-A) zugewiesen wurde, höher als ein festgelegter dritter Schwellenwert ist, Zuweisen des Anomaliezustands (C-A) zu dem erfassten digitalen Bild,
wenn die Anzahl der Pixel, denen der Anomaliezustand (C-A) zugewiesen wurde, niedriger als der festgelegte zweite Schwellenwert ist oder die Pixelflächendichte, der ein Anomaliezustand (C-A) zugewiesen wurde, niedriger als der festgelegte dritte Schwellenwert ist, Zuweisen des Normalitätszustands (C-N) zu dem erfassten digitalen Bild.

2. Verfahren (100) nach Anspruch 1, umfassend einen Schritt des Fortsetzens (106), durch die erste Datenverarbeitungseinheit (40), des Dauerhaftigkeitstests des Objekts (1), wenn dem erfassten digitalen Bild der Normalitätszustand (C-N) zugewiesen wurde, durch Durchführen von Schritt a), um ein nächstes digitales Bild des Objekts (1) zu erfassen, und der Schritte b)-e) an dem nächsten erfassten digitalen Bild.

3. Verfahren (100) nach Anspruch 1 oder 2, umfassend einen Schritt des Unterbrechens (107), durch die erste Datenverarbeitungseinheit (40), des Dauerhaftigkeitstests des Objekts (1), wenn dem erfassten digitalen Bild der Anomaliezustand (C-A) zugewiesen wurde.

4. Verfahren (100) nach Anspruch 3, wobei der Schritt des Unterbrechens (107) des Dauerhaftigkeitstests des Objekts einen Schritt des Sendens (108), durch die erste Datenverarbeitungseinheit (40), einer entsprechenden Nachricht an einen Bediener des Prüfstands (20) umfasst.

5. Verfahren (100) nach Anspruch 3 oder 4, wobei der Schritt des Unterbrechens (107) des Dauerhaftigkeitstests des Objekts einen Schritt des Speicherns (109), durch die erste Datenverarbeitungseinheit (40), erster Informationen, die repräsentativ für den unterbrochenen Dauerhaftigkeitstest sind, in einer ersten Speichereinheit (50), die funktional mit der ersten Datenverarbeitungseinheit (40) verbunden ist, umfasst.

6. Verfahren (100) nach einem der vorhergehenden Ansprüche, umfassend, bei Abwesenheit von erfassten digitalen Bildern, denen der Anomaliezustand (C-A) zugewiesen ist, einen Schritt des Beendens (110), durch die erste Datenverarbeitungseinheit (40), des Dauerhaftigkeitstests des Objekts (1), wenn ein festgelegter Testzeitdauerwert erreicht wird, der während der Einrichtung des Prüfstands festgelegt wurde.

7. Verfahren (100) nach Anspruch 6, wobei der Schritt des Beendens (110) des Dauerhaftigkeitstests des Objekts (1) einen Schritt des Speicherns (111), durch die erste Datenverarbeitungseinheit (40), zweiter Informationen, die repräsentativ für den beendeten Dauerhaftigkeitstest sind, in der ersten Speichereinheit (50), die funktional mit der ersten Datenverarbeitungseinheit (40) verbunden ist, umfasst.

8. Verfahren (100) nach einem der vorhergehenden Ansprüche, umfassend einen Schritt f) des Trainierens (112), durch eine zweite Datenverarbeitungseinheit (60), mittels eines entsprechenden Trainingsalgorithmus (T-R), des Anomalieerkennungsalgorithmus (A-D) in einem festgelegten Anfangszeitintervall des Dauerhaftigkeitstests, dem das zu untersuchende Objekt (1) unterzogen wird.

9. Verfahren (100) nach Anspruch 8, wobei der Schritt f) des Trainierens (112) die Schritte umfasst:
f1) Erfassen (113), durch die zweite Datenverarbeitungseinheit (60) mittels der mit der zweiten Datenverarbeitungseinheit (60) funktional verbundenen digitalen Bilderfassungsvorrichtung (30), einer Vielzahl von digitalen Bildern des Objekts (1);
f2) Verarbeiten (114), durch die zweite Datenverarbeitungseinheit (60), der Vielzahl von erfassten digitalen Bildern des Objekts (1);
f3) Bereitstellen (117), durch die zweite Datenverarbeitungseinheit (60), der Vielzahl von verarbeiteten digitalen Bildern des Objekts (1) an den zu trainierenden Anomalieerkennungsalgorithmus (A-D), wobei die vorläufige Vielzahl von verarbeiteten digitalen Bildern des Objekts (1) eine Vielzahl von digitalen Referenzbildern repräsentiert, die durch die erste Datenverarbeitungseinheit (40) mittels des trainierten Anomalieerkennungsalgorithmus (A-D) zum Erkennen von Anomalien des dem Dauerhaftigkeitstest unterzogenen Objekts verwendbar sind.

10. System (10) zur Echtzeiterkennung von Anomalien eines Objekts (1), das einem Dauerhaftigkeitstest auf einem Prüfstand (20) unterzogen wird, umfassend:
einen Prüfstand (20), der dazu konfiguriert ist, ein Objekt (1) einem Dauerhaftigkeitstest zu unterziehen;
eine digitale Bilderfassungsvorrichtung (30), die funktional mit dem Prüfstand (20) verbunden und dazu konfiguriert ist, digitale Bilder des Objekts (1) oder eines Teils des Objekts (1) zu erfassen, an dem Anomalien erkannt werden sollen;
eine erste Datenverarbeitungseinheit (40), die funktional mit der digitalen Bilderfassungsvorrichtung (30) verbunden und dazu konfiguriert ist, einen mittels Techniken der künstlichen Intelligenz und/oder des "maschinellen Lernens" trainierten Anomalieerkennungsalgorithmus (A-D) auszuführen;
wobei die erste Datenverarbeitungseinheit (40) dazu konfiguriert ist, ein Verfahren zur Echtzeiterkennung von Anomalien eines Objekts (1), das einem Dauerhaftigkeitstest unterzogen wird, nach einem der vorhergehenden Ansprüche 1 bis 6 durchzuführen.

11. System (200) nach Anspruch 10, ferner umfassend eine zweite Datenverarbeitungseinheit (60), die dazu konfiguriert ist, Schritte des Verfahrens zur Echtzeiterkennung von Anomalien eines Objekts (1), das einem Dauerhaftigkeitstest unterzogen wird, nach einem der vorhergehenden Ansprüche 8 bis 9 durchzuführen.

## Revendications

1. Procédé (100) de détection en temps réel d'anomalies d'un objet (1) soumis à un essai de durabilité, comprenant, tout en effectuant un essai de durabilité sur un banc d'essai (20), les étapes consistant à :
a) acquérir (101), par un dispositif d'acquisition d'image numérique (30) relié de manière opérationnelle au banc d'essai (20), une image numérique de l'objet (1) ou d'une partie de l'objet (1) sur laquelle des anomalies doivent être détectées ;
**caractérisé en ce qu'**il comprend :
b) fournir (102), par le dispositif d'acquisition d'image (30), ladite image numérique acquise à une première unité de traitement de données (40) fonctionnellement reliée audit dispositif d'acquisition d'image numérique (30) et adaptée pour exécuter un algorithme de détection d'anomalies (A-D) entraîné au moyen de techniques d'intelligence artificielle et/ou d' « apprentissage automatique » ;
c) attribuer (103), par ladite première unité de traitement de données (40) en exécutant ledit algorithme de détection d'anomalies entraîné (A-D), à chaque pixel de l'image numérique acquise une valeur représentative d'un niveau de correspondance entre ledit pixel et le même pixel d'au moins une image numérique de référence représentative d'une condition de normalité de l'objet (1) obtenue lors de l'entraînement dudit algorithme de détection d'anomalies (A-D) ;
d) comparer (104), par ladite première unité de traitement de données (40) en exécutant ledit algorithme de détection d'anomalies entraîné (A-D), la valeur attribuée à chaque pixel de l'image numérique acquise avec une première valeur de seuil définie,
si la valeur attribuée est inférieure à la première valeur de seuil définie, une condition de normalité (C-N) est attribuée au pixel,
si la valeur attribuée est supérieure à la première valeur de seuil définie, une condition d'anomalie (C-A) est attribuée au pixel ;
e) attribuer (105), par ladite première unité de traitement de données (40) en exécutant ledit algorithme de détection d'anomalies entraîné (A-D), à l'image numérique acquise une condition de normalité (C-N) ou d'anomalie (C-A) basée sur la condition attribuée à chaque pixel de l'image numérique acquise,
si le nombre de pixels auxquels la condition d'anomalie (C-A) a été attribuée est supérieur à une deuxième valeur de seuil définie et que la densité surfacique de pixels à laquelle une condition d'anomalie (C-A) a été attribuée est supérieure à une troisième valeur de seuil définie, attribuer la condition d'anomalie (C-A) à l'image numérique acquise,
si le nombre de pixels auxquels la condition d'anomalie (C-A) a été attribuée est inférieur à la deuxième valeur de seuil définie ou si la densité surfacique de pixels à laquelle une condition d'anomalie (C-A) a été attribuée est inférieure à la troisième valeur de seuil définie, attribuer la condition de normalité (C-N) à l'image numérique acquise.

2. Procédé (100) selon la revendication 1, comprenant une étape de poursuite (106), par la première unité de traitement de données (40), de l'essai de durabilité de l'objet (1) si la condition de normalité (C-N) a été attribuée à l'image numérique acquise, en effectuant l'étape a) pour acquérir une image numérique suivante de l'objet (1) et les étapes b) - e) sur l'image numérique acquise suivante.

3. Procédé (100) selon la revendication 1 ou 2, comprenant une étape d'interruption (107), par la première unité de traitement de données (40), de l'essai de durabilité de l'objet (1) si la condition d'anomalie (C-A) a été attribuée à l'image numérique acquise.

4. Procédé (100) selon la revendication 3, dans lequel l'étape d'interruption (107) de l'essai de durabilité de l'objet comprend une étape d'envoi (108), par la première unité de traitement de données (40), d'un message respectif à un opérateur du banc d'essai (20).

5. Procédé (100) selon la revendication 3 ou 4, dans lequel l'étape d'interruption (107) de l'essai de durabilité de l'objet comprend une étape de stockage (109), par la première unité de traitement de données (40), de premières informations représentatives de l'essai de durabilité interrompu dans une première unité de mémoire (50) fonctionnellement reliée à la première unité de traitement de données (40).

6. Procédé (100) selon l'une quelconque des revendications précédentes, comprenant, en l'absence d'images numériques acquises auxquelles la condition d'anomalie (C-A) est attribuée, une étape consistant à terminer (110), par la première unité de traitement de données (40), l'essai de durabilité de l'objet (1) lorsqu'une valeur de durée de temps de test définie, définie pendant la configuration du banc de test, est atteinte.

7. Procédé (100) selon la revendication 6, dans lequel l'étape consistant à terminer (110) l'essai de durabilité de l'objet (1) comprend une étape consistant à stocker (111), par la première unité de traitement de données (40), des deuxièmes informations représentatives de l'essai de durabilité terminé dans la première unité de mémoire (50) fonctionnellement reliée à la première unité de traitement de données (40).

8. Procédé (100) selon l'une quelconque des revendications précédentes, comprenant une étape f) d'entraînement (112), par une deuxième unité de traitement de données (60), au moyen d'un algorithme d'apprentissage respectif (T-R), ledit algorithme de détection d'anomalies (A-D) dans un intervalle de temps initial défini de l'essai de durabilité auquel l'objet (1) à examiner est soumis.

9. Procédé (100) selon la revendication 8, dans lequel l'étape f) d'entraînement (112) comprend les étapes consistant à :
f1) acquérir (113), par la deuxième unité de traitement de données (60) au moyen du dispositif d'acquisition d'images numériques (30) fonctionnellement relié à la deuxième unité de traitement de données (60), une pluralité d'images numériques de l'objet (1) ;
f2) traiter (114), par la deuxième unité de traitement de données (60), ladite pluralité d'images numériques acquises de l'objet (1) ;
f3) fournir (117), par la deuxième unité de traitement de données (60), ladite pluralité d'images numériques traitées de l'objet (1) à l'algorithme de détection d'anomalies (AD) à entraîner, ladite pluralité préliminaire d'images numériques traitées de l'objet (1) représentant une pluralité d'images numériques de référence utilisables par la première unité de traitement de données (40), au moyen de l'algorithme de détection d'anomalies entraîné (A-D), pour détecter des anomalies de l'objet soumis à l'essai de durabilité.

10. Système (10) de détection en temps réel d'anomalies d'un objet (1) soumis à un essai de durabilité sur un banc d'essai (20), comprenant :
un banc d'essai (20) configuré pour soumettre un objet (1) à un essai de durabilité ;
un dispositif d'acquisition d'image numérique (30), fonctionnellement relié au banc d'essai (20), configuré pour acquérir des images numériques de l'objet (1) ou d'une partie de l'objet (1) sur laquelle des anomalies doivent être détectées ;
une première unité de traitement de données (40) fonctionnellement reliée audit dispositif d'acquisition d'image numérique (30) et configurée pour exécuter un algorithme de détection d'anomalies (A-D) entraîné au moyen de techniques d'intelligence artificielle et/ou d'« apprentissage automatique » ;
la première unité de traitement de données (40) étant configurée pour mettre en œuvre un procédé de détection en temps réel d'anomalies d'un objet (1) soumis à un essai de durabilité selon l'une quelconque des revendications précédentes 1 à 6.

11. Système (200) selon la revendication 10, comprenant en outre une deuxième unité de traitement de données (60) configurée pour effectuer les étapes du procédé de détection d'anomalies en temps réel d'un objet (1) soumis à un essai de durabilité selon l'une quelconque des revendications précédentes 8 à 9.
